Europäisches Patentamt

European Patent Office

Office européen des brevets

(11) Publication number: **0 391 601 A2**

## EUROPEAN PATENT APPLICATION

(21) Application number: **90303336.3**

(22) Date of filing: **29.03.90**

(51) Int. Cl.⁵: **F03D 11/04**

(30) Priority: **07.04.89 GB 8907889**

(43) Date of publication of application:
**10.10.90 Bulletin 90/41**

(84) Designated Contracting States:
**AT BE CH DE DK ES FR GB GR IT LI LU NL SE**

(71) Applicant: **Kirby, John**
**Ramslan Cottage, 75 Ford, Holbeton**
**Plymouth, South Devon(GB)**

(72) Inventor: **Kirby, John**
**Ramslan Cottage, 75 Ford, Holbeton**
**Plymouth, South Devon(GB)**

(74) Representative: **McNeight, David Leslie et al**
**McNeight & Lawrence Regent House Heaton**
**Lane**
**Stockport Cheshire SK4 1BS(GB)**

(54) **Flying generator.**

(57) An electric generator and a wind driven rotor are carried aloft on a kite, which may comprise an aerofoil, to a height where stronger winds are found than at ground level and avoiding the need for robust ground structures.

EP 0 391 601 A2

## FLYING GENERATOR

This invention relates to arrangements for generating electrical energy from wind power.

Conventional aerogenerators suffer from a number of disadvantages.

The requirement that they be robust structures in order to stand high wind forces means that they must generally be made to high and expensive engineering specifications.

They are located on the ground and so the vanes of the windmill necessarily experience only a limited wind force, because winds close to the ground are less strong than winds at higher altitudes.

Efficient wind capture generally requires a line or "farm" of windmills, usually on elevated ground. Such windmill farms take up a lot of space.

The present invention provides an arrangement for converting wind energy into electrical energy which avoids the disadvantages of conventional windmills and arrangements.

The arrangement comprises a wind driven rotor, a generator for generating electricity, driven by the rotor, and kite means carrying the rotor and generator.

The kite means may comprise an aerofoil arrangement comprising control surfaces for adjusting lift, attitude and lateral balance. The control surfaces may comprise ailerons and/or other control surfaces.

The arrangement may comprise wind velocity sensing means and altitude sensing means. The sensing means may communicate with control means for the control surfaces.

The rotor may be a Savonius rotor, which may be attached to the high pressure side of the aerofoil and thereby enhance lift.

The kite means may comprise tethering means for tethering the arrangement and the tethering means may comprise a line, line tension measuring means, and winch means for hauling in and letting out the line in accordance with line tension. The winch means may operate automatically according to the tension measured in the line by the line tension measuring means.

The line of the tethering means may comprise a carbon fibre or Kevlar rope, and the kite may be made from a reinforced plastics material such as fibre glass.

The elctricity generator may be connected to an electricity storage arrangement.

The arrangement preferably comprises an earth line.

An arrangement according to the invention will now be described with reference to the accompanying drawings, in which :-

Figure 1 illustrates a perspective of the arrangement; and

Figure 2 illustrates a diagrammatic arrangement of the tethering means of the arrangement.

The drawings illustrate an arrangement 11 for converting wind energy into electrical energy, comprising a wind driven rotor 12, an electricity generator 13, driven by the rotor 12, and a kite 14 carrying the rotor 12 and generator 13.

The kite 14 comprises an aerofoil arrangement 15 comprising control surfaces, such as ailerons 17,18 for adjusting lift, lateral balance and so on.

The arrangement comprises an altimeter 20 and an air speed indicator 19.

The altimeter 20 and ASI 19 communicate, for example, via a controller with a computer 21 which dictates the alignment of the ailerons 17,18 and other control surfaces so that the arrangement is stable and adopts an attitude which is optimum to maintain height and for the rotor blades to extract energy from the wind.

The rotor 12, as illustrated, is a Savonius rotor.

The rotor 12 is built in to the high pressure side of the aerofoil arrangement 15, which enhances lift.

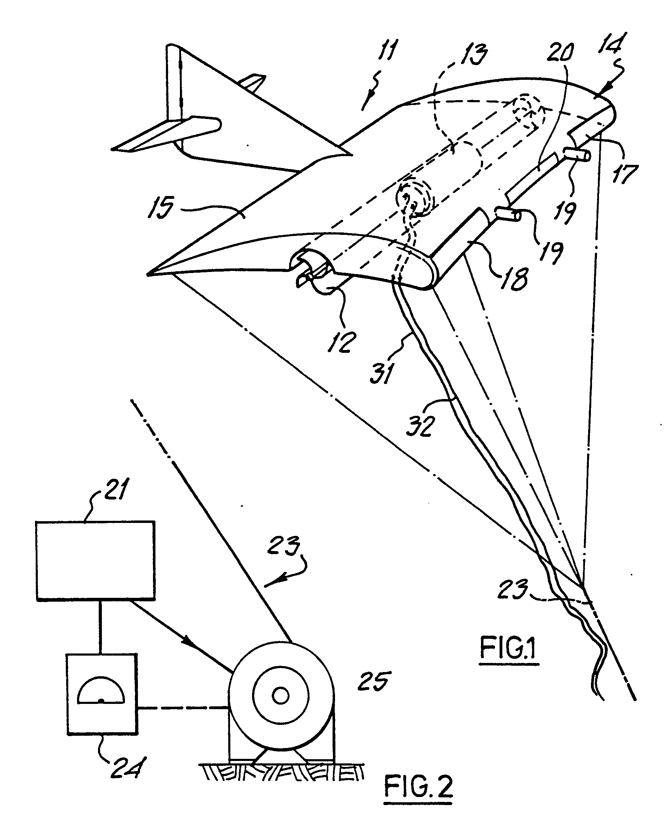

The kite 14 comprises a line 23 and a line tension gauge 24 together with a winch 25 (Figure 2) for hauling in and letting out the line 23 in accordance with tension in the line 23.

The winch 25 is controlled by the computer 21 so as to operate automatically according to the tension measured in the line 23 by the line tension gauge 24.

In the preferred embodiment the line 23 is a carbon fibre or Kevlar rope.

The arrangement comprises a conductor 31 and an earth line 32.

The kite 14 can be fabricated in a reinforced plastics material such as fibre glass. It is not necessary to use expensive aerospace quality materials since the kite is not intended to be manned.

Ordinarily, the elctricity generator is connected to an electricity storage arrangement such as an accumulator. It will be appreciated, however, that the electricity generated by the arrangement may equally well feed, via a transformer, and with suitable synchronisation, as by a static converter, into the grid system, or be used directly to power electrical apparatus.

## Claims

1. An arrangement for converting wind energy into electrical energy, comprising a wind driven rotor, a generator for generating electricity, driven by the rotor, and kite means for carrying the rotor and generator.

2. An arrangement according to claim 1, characterised in that the kite means comprises an aerofoil arrangement.

3. An arrangement according to claim 2, characterised in that the aerofoil arrangement comprises control surfaces for adjusting lift, attitude and lateral balance.

4. An arrangement according to either one of claims 2 and 3, characterised by comprising wind velocity sensing means.

5. An arrangement according to any one of claims 2 to 4, characterised by comprising altitude sensing means.

6. An arrangement according to either one of claims 4 and 5, characterised in that the sensing means communicate with a control means for the control surfaces.

7. An arrangement according to claim 1, characterised in that the rotor comprises a Savonius rotor.

8. An arrangement according to any one of claims 1 to 7, characterised in that the rotor is attached to the high pressure side of the aerofoil, thus enhancing lift.

9. An arrangement according to claim 1, characterised in that the kite means comprises tethering means for tethering the arrangement.

10. An arrangement according to claim 9, characterised in that the tethering means comprises a line, and comprising a line tension measuring means, and a winch hauling in and letting out the line in accordance with the line tension.

11. An arrangement according to claim 10, characterised in that the winch operates automatically according to the tension measured in the line by the line tension measuring means.

12. An arrangement according to either one of claims 10 and 11, characterised in that the line comprises a carbon fibre rope.

13. An arrangement according to any one of claims 1 to 12, characterised in that the kite is made from a reinforced plastics material such as fibre glass.

14. An arrangement according to claim 1, characterised in that the generator is connected to an electricity storage arrangement.

15. An arrangement according to any one of claims 1 to 14, characterised by comprising an earth line.

16. A method for generating electricity from wind power characterised by comprising raising aloft a generator and wind driven rotor driving said generator by means of a kite.

17. A method according to claim 16, characterised in that the kite is controlled according to the wind conditions.

FIG.1

FIG.2